# EUROPÄISCHE PATENTSCHRIFT

(11) **EP 0 523 410 B1**
(45) Veröffentlichungstag und Bekanntmachung des Hinweises auf die Patenterteilung: **20.08.1997**
(21) Anmeldenummer: 92110617.5
(22) Anmeldetag: 24.06.1992
(51) Int. Cl.: H04R 1/02, H04R 1/28, B60R 11/02

(54) **Wiedergabeanordnung für Basstöne im Kraftfahrzeug**
Arrangement for reproducing bass sound in vehicles
Disposition de reproduction des sons graves dans des véhicules

(30) Priorität: 28.06.1991 DE 4121408
(43) Veröffentlichungstag der Anmeldung: 20.01.1993
(73) Patentinhaber: Nokia (Deutschland) GmbH, 75175 Pforzheim (DE)
(72) Erfinder: Prokisch, Jörg, W-8445 Schwarzach (DE); Kirk, Edgar, W-8000 München 83 (DE); Etzel, Hubert, W-8380 Landau/Isar (DE); Fleischer, Rüdiger, W-8351 Grafling (DE)

(56) Entgegenhaltungen:
- EP-A- 0 187 346
- WO-A-91/01544
- DE-A- 3 037 186
- DE-U- 8 901 575
- GB-A- 1 392 609

## Beschreibung

### Technisches Gebiet

Die Erfindung befaßt sich mit der Wiedergabe von tieffrequenten Tönen im Kraftfahrzeug, insbesondere in Personenkraftfahrzeugen.

### Stand der Technik

Sollen tiefe und sehr tiefe Tonfrequenzen mittels elektroakustischer Wandler übertragen werden, werden die Wandler zur Erreichung eines guten Klangbildes bzw. einer hochwertigen Schallwiedergabe in im wesentlichen geschlossenen Lautsprecherboxen angeordnet.

In diesem Zusammenhang sei zunächst auf die allseitig bekannte Baßreflexbox hingewiesen. Bei diesem Boxentyp, bei dem der Lautsprecher derart in der Außenfläche des Lautsprechergehäuses eingebaut ist, daß er direkt in das Volumen der Umgebung abstrahlt, soll das Resonanzgebilde aus Luftvolumen und akustischer Masse einer zusätzlichen im Gehäuse angeordneten Abstrahlöffnung in einem bestimmten Frequenzbereich als Phasendreher wirken und die Summatation der von der Membranvorderseite und der Membranrückseite abgestrahlten Energie bewirken.

Des weiteren sind auch Anordnungen bekannt, bei denen der Lautsprecher in der das Gehäuse der Lautsprecherbox in zwei verschieden große oder auch gleich große Volumina unterteilenden Trennwand eingesetzt ist. Diese Anordnungen bilden auch den Ausgangspunkt für die vorliegende Erfindung. Die Schallabstrahlung erfolgt bei solchen Anordnungen durch eine Öffnung, welche eines der beiden Volumina mit der Umgebung verbindet. Diese Lautsprecheranordnung, welche auch als Doppelkammerprinzip bekannt ist, zeichnet sich dadurch aus, daß der Lautsprecher völlig von dem Lautsprechergehäuse umgeben ist und somit nicht - wie die Baßreflexboxen - Außenflächen erfordert, die von ihren Abmessungen her in der Lage sind, die großen Baßlautsprecher aufzunehmen. Da ein Helmholtz-Resonator ein Bandpassübertragungsverhalten 2. Ordnung besitzt und der Nutzschall der Doppelkammerbox nur aus dem von dem Baßreflexkanal abgestrahlten Schall besteht, wird durch diese Anordnung eine akustische Filterwirkung erzielt. Durch entsprechend Dimensionierung (vergl. etwa den Aufsatz von L. R. Fincham; KEF Electronics Limited, Maidstone-England, mit dem Titel: A Bandpass Loudspeaker Enclosure) der beiden Volumina und deren Verhältnis zueinander kann in Verbindung mit einem geeigneten Lautsprecher eine sehr tiefe und in bestimmten Grenzen beliebig breitbandige Abstimmung erfolgen. Mit anderen Worten, es kann allein durch die Abstimmung der beiden verschiedenen Resonanzfrequenzen einer solchen Box die Baßübertragung auf ein außerordentlich niedriges Frequenzspektrum beschränkt werden.

Ein weiterer Vorteil von Doppelkammerboxen ist es, daß sie bei gleicher Klangqualität gegenüber Baßreflexboxen wesentlich kleiner ausgebildet werden können. Bei Einsatz von Subwoofern kann bei stereotoner Wiedergabe von Tonsignalen sogar auf die Ausstattung eines jeden Kanals mit einer separaten Baßbox verzichtet werden, wenn der in der Trennwand eingesetzte Lautsprecher als Doppelspulenlautsprecher ausgebildet wird. Die gemeinsame Wiedergabe von Baßsignalen mittels einer Subwooferbox ist deshalb möglich, da derartige Boxen mit einem Tiefpaßfilter mit sehr tiefer Grenzfrequenz abgekoppelt werden. Die niedrige Abkopplung hat zur Folge, daß das menschliche Gehör in diesem Frequenzbereich nicht mehr in der Lage ist, die diesen niederfrequenten Ton aussendende Quelle zu lokalisieren. Da die Doppelkammerbox bereits akustisch eine Baßpaßübertragungscharakteristik 2.Ordnung aufweist, ist die Abkopplung auch mit einfachen Filtern sehr wirkungsvoll möglich.

Ebenso wie die Baßreflexboxen benötigen auch die Subwooferboxen zu einer akzeptablen Schallwiedergabe ein bestimmtes Mindestvolumen. Dieses liegt nach Erkenntnissen der Anmelderin bei mindestens sieben Litern. Dieser Mindestraumbedarf ist aber in Innenräumen von modernen Personenkraftwagen kaum verfügbar. Dies zeigt sich schon daran, daß in DE-A-3037186 und EP-A-0187346 als mögliche Einbauorte für einzelne Lautsprecher Seitenarmlehnen im Kraftfahrzeug genannt werden, welche allerdings vom Raumangebot her für die Aufnahme von Boxen der oben genannten Art völlig ausscheiden. Aus diesem Grunde werden bei einigen Automobilherstellern, wenn Subwooferboxen im Kraftfahrzeug eingesetzt werden sollen, diese im Kofferraum angeordnet und die Schallaustrittsöffnungen ins Innere des Fahrgastraumes geführt. Abgesehen davon, daß die Führung der Schallaustrittsöffnungen vom Kofferraum in den Innenraum des Fahrzeuges sehr aufwendig ist, wird es allgemein auch als nachteilig angesehen, den Kofferraum durch den Einbau von zusätzlichen Bauteilen - wie etwa die Subwooferboxen - zu verkleinern.

Weiterhin sind Anordnungen bekannt, die angeben, die Subwooferboxen unterhalb der Vordersitze anzuordnen. Diese Position im Inneren der Fahrgastzelle von Personenkraftwagen ist aber nur bedingt ausnutzbar. Oftmals ist dieser Raum schon mit Stellmotoren für die elektrische Sitzverstellung belegt. Aber auch dann, wenn trotz der Stellmotoren für die Sitzverstellung noch Platz für eine Boxenanordnung verbleibt, sind dann für jeden PKW-Hersteller bzw. PKW-Typ unterschiedliche Boxengehäuse auszubilden, um den individuell verbleibenden Platz optimal auszunutzen.

Daher liegt der Erfindung die Aufgabe zugrunde, eine Wiedergabeanordnung für Baßtöne anzugeben, die nach dem Subwooferprinzip arbeitet und die im Inneren eines Personenkraftwagens einsetzbar ist, wobei diese Box für eine Vielzahl verschiedener Personenkraftwagen standardisiert ist.

### Darstellung der Erfindung

Diese Aufgabe wird durch den Anspruch 1 gelöst.

Besonders gute Klangergebnisse werden erzielt, wenn - wie in Anspruch 2 angegeben - die Schallaustrittsöffnung der Subwooferbox im ausgeklappten Zustand der Armlehne in Richtung zum Armaturenbrett des Fahrzeuges weist. Die Baßwiedergabe durch die in der Armlehne integrierte Subwooferbox wird nicht durch ein Einklappen der Armlehne in die Einbauöffnung beeinträchtigt, wenn - gemäß Anspruch 3 - das Sitzelement, welches die Armlehne aufnehmen soll, so ausgebildet ist, daß es bei hochgeklappter Armlehne die Schallaustrittsöffnung weder verdeckt noch verschließt.

Weitere vorteilhafte Ausbildungen der Erfindung sind in den Ansprüchen 4 bis 6 angegeben.

Ganz besonders vorteilhaft ist, wenn der Verstärker für den Baßlautsprecher der Subwooferbox innerhalb des Boxengehäuses angeordnet ist. Durch diese Maßnahme lassen sich herkömmliche Armlehnen sehr schnell durch mit Subwooferboxen ausgestattete Armlehnen ersetzen, da zum Betrieb von Subwooferarmlehnenboxen diese allein durch die Verbindung der Zuleitung zum Verstärker mit der Signalquelle betriebsfähig sind.

Ist der Baßreflexkanal gleichzeitig als Kühlstrecke für den Verstärker ausgebildet, wird die Abwärme des Verstärkers durch die im Baßreflexkanal bewegte Luft abgeführt.

### Kurze Darstellung der Figuren

Es zeigen:
- Figur 1: eine in der Armlehne eines Personenkraftwagens integrierte Subwooferbox im Schnitt; und
- Figur 2: die in Figur 1 gezeigte Armlehnenbox, wobei diese Box in das Sitzelement eingeklappt ist.

### Wege zum Ausführen der Erfindung

Die Erfindung soll nun anhand der beiden Figuren näher erläutert werden.

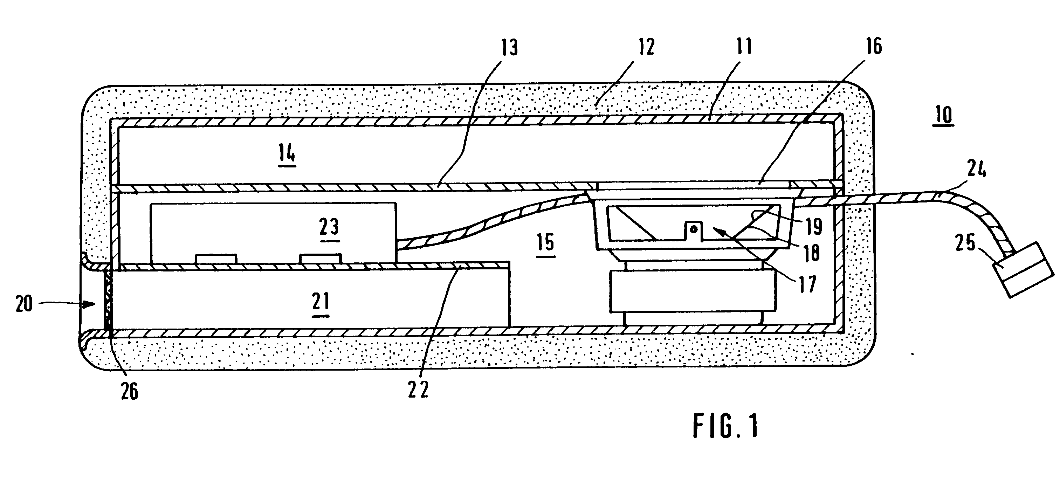

Die Außenkonturen der in Figur 1 im Schnitt dargestellten Subwooferbox 10 werden von dem Gehäuse 11 gebildet. Das Gehäuse 11 mit einem Gesamtinnenvolumen von acht Litern ist auf der Außenseite vollständig mit der Polsterung 12 ummantelt. Durch eine verschieden dicke Polsterung 12 kann die Außenkontur der Subwooferarmlehnenbox in sehr einfacher Weise dem Raumangebot in verschiedenen Kraftfahrzeugen angepaßt werden, ohne daß das Gehäuse 11 der Box selbst verändert wird.

Das Innere des Gehäuses 11 ist mittels der Trennwand 13 in ein geschlossenes Volumen 14 und ein Baßreflexvolumen 15 unterteilt. Trennwand 13 ist mit einer Öffnung 16 versehen. In diese Öffnung 16 ist der Baßlautsprecher 17 eingesetzt, und zwar dergestalt, daß die Innenkontur 18 der Lautsprechermembran 19 zum geschlossenen Volumen 14 hinweist.

Die Schallaustrittsöffnung 20, welche das Baßreflexvolumen 15 mit der Umgebung verbindet, ist in dieses Volumen 15 hinein als Baßreflexkanal 21 ausgebildet. Die Wandung 22 dieses Kanals 21 ist aus Blech gebildet und dient damit dem auf ihr angeordneten Verstärker 23 als Kühlstrecke. Die Kontaktierung des Verstärkers 23 erfolgt über den Kabelstrang 24 und den Stecker 25. Gerade der Stecker 25 ermöglicht eine schnelle Kontaktierung, wenn Kraftfahrzeuge mit der Subwooferarmlehnenbox nachgerüstet werden sollen, denn in diesem Falle ist zum Betrieb der Subwooferarmlehnenbox lediglich ein Austausch der vorhandenen Armlehne gegen die Subwooferarmlehnenbox und einer Kontaktierung der Steckers 25 erforderlich. Auf eine Darstellung der Kontaktierung zwischen dem Verstärker 23 und dem Lautsprecher 19 wurde verzichtet.

Die Schallaustrittsöffnung 20 ist mit einem Gitter 26 versehen, welches ein Eindringen von Gegenständen in das Innere des Gehäuses 11 nachhaltig unterbindet.

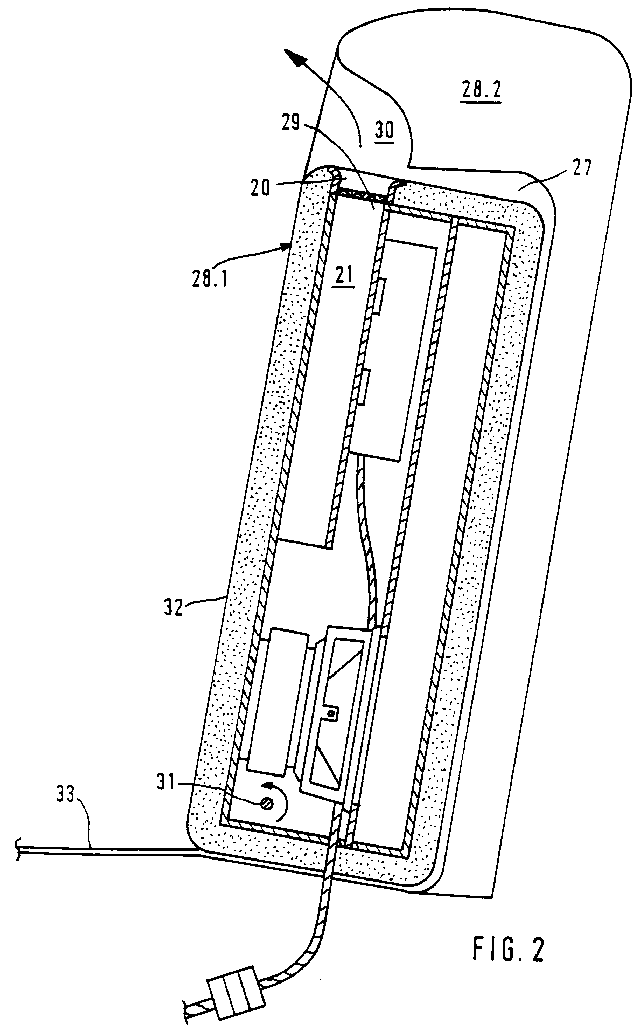

In Figur 2 ist die in Figur 1 gezeigte Subwooferarmlehnenbox in die Einschuböffnung 27 des im Ausschnitt gezeigten Sitzelements eingeschoben. In dieser Position verläuft der Baßreflexkanal 21 in etwa paralell zur Ebene 28.1 des Lehnenelementes 28.2. Dadurch, daß im Bereich der Mündung 29 des Baßreflexkanals 21 das Lehnenelement 28.2 eine Ausformung 30 aufweist, wird die Klangqualität der Box nicht beeinträchtigt. Insbesondere läßt die Ausformung 30 einen Schallaustritt aus dem Baßreflexrohr 21 längs des Pfeils ins Innere des Kraftfahrzeuges zu. Position 31 markiert den Drehpunkt der Subwooferarmlehnenbox. Wird die Armlehnenbox um den Drehpunkt 31 mit der Seite 32 auf die Sitzfläche 33 abgesenkt, weist die Schallaustrittsöffnung 20 in Richtung des Armaturenbretts des Kraftfahrzeuges. Diese Position der Subwooferarmlehnenbox ist in der Figur 2 aus Gründen der Übersichtlichkeit nicht dargestellt worden.

Abschließend sei darauf hingewiesen, daß auch in der hochgestellten Position der Subwooferarmlehnenbox gemäß Figur 2 die Klangqualität der Box nicht beeinträchtigt wird.

Wird das Innenvolumen der Subwooferarmlehnenbox gemäß Figur 1 und Figur 2 auf etwa acht Liter begrenzt, kann die Box durch eine verschieden starke Polsterung 12 für eine Vielzahl von unterschiedlichen Personenkraftwagen als Subwooferarmlehnenbox verwendet werden.

## Patentansprüche

1. Wiedergabeanordnung für Baßtöne in Personenkraftwagen
- mit einem allseitig geschlossenen Gehäuse (11),
- mit einer Trennwand (13), welche den Innenraum des Gehäuses (11) in zwei Volumina (14, 15) unterteilt,
- mit einem Lautsprecher (17), der in der Öffnung (16) der Trennwand (13) angeordnet ist, und
- mit einer Schallaustrittsöffnung (20), welche eines der beiden Volumina (14/15) mit dem Raum außerhalb des Gehäuses (11) verbindet,
**dadurch gekennzeichnet,**
daß die Wiedergabeanordnung ein Gesamtvolumen von etwa 8 Litern aufweist und
daß die Wiedergabeanordnung vollständig im Inneren der Mittelarmlehne eines Kraftfahrzeuges angeordnet ist.

2. Wiedergabeanordnung nach Anspruch 1,
**dadurch gekennzeichnet,**
daß die Schallaustrittsöffnung (20) in ausgeklapptem Zustand der Mittelarmlehne in Richtung zum Armaturenbrett des Fahrzeugs hingerichtet ist.

3. Wiedergabeanordnung nach Anspruch 1,
**dadurch gekennzeichnet,**
daß das Sitzelement, welches in der Lage ist, die Mittelarmlehne in hochgeklapptem Zustand in eine Einschuböffnung (27) aufzunehmen, so ausgebildet ist,
daß die Schallaustrittsöffnung (20) hierdurch weder abgedeckt noch verschlossen wird.

4. Wiedergabeanordnung nach einem der Ansprüche 1 bis 3,
**dadurch gekennzeichnet,**
daß die Schallaustrittsöffnung (20), welche eines der beiden Volumina (14, 15) mit dem Raum außerhalb des Gehäuses (11) verbindet, die Mündung (29) eines in das jeweilige Volumen (14/15) hineinragenden Baßreflexkanals (21) ist.

5. Wiedergabeanordnung nach Anspruch 4,
**dadurch gekennzeichnet,**
daß der Verstärker (23) zum Antrieb des Lautsprechers (17) in einem der beiden Volumina (14/15) angeordnet ist.

6. Wiedergabeanordnung nach Anspruch 5,
**dadurch gekennzeichnet,**
daß der Baßreflexkanal (21) zumindest teilweise aus Blech gebildet ist, und daß der Verstärker (23) hierauf so angeordnet ist, daß er einen Teil seiner Abwärme über den Baßreflexkanal (21) abgibt.

## Claims

1. Reproduction arrangement for bass notes in passenger cars
- having a housing (11) which is closed on all sides,
- having a partition (13) which subdivides the interior of the housing (11) into two volumes (14, 15),
- having a loudspeaker (17) which is disposed in the opening (16) of the partition (13), and
- having a sound outlet opening (20) which connects one of the two volumes (14/15) with the space outside the housing (11),
characterized
in that the reproduction arrangement has a total volume of about 8 litres and
in that the reproduction arrangement is disposed completely in the interior of the centre arm rest of a motor vehicle.

2. Reproduction arrangement according to Claim 1, characterized in that the sound outlet opening (20) is directed in the direction of the dashboard of the vehicle in the swung-out state of the centre arm rest.

3. Reproduction arrangement according to Claim 1, characterized in that the seat component which is capable of receiving the centre arm rest in an insertion opening (27) in the folded-up state is so designed that the sound outlet opening (20) is thereby neither covered nor sealed.

4. Reproduction arrangement according to one of Claims 1 to 3, characterized in that the sound outlet opening (20), which connects one of the two volumes (14, 15) to the space outside the housing (11) is the mouth (29) of a bass reflex duct (21) which projects into the respective volume (14/15).

5. Reproduction arrangement according to Claim 4, characterized in that the amplifier (23) for driving the loudspeaker (17) is disposed in one of the two volumes (14/15).

6. Reproduction arrangement according to Claim 5, characterized in that the bass reflex duct (21) is at least partially formed from sheet metal, and in that the amplifier (23) is disposed thereon in such a way that it gives up some of its waste heat via the bass reflex duct (21).

## Revendications

1. Dispositif de reproduction de sons graves dans des voitures particulières, comportant
- un boîtier (11) fermé de tous les côtés,
- une paroi de séparation (13) qui subdivise l'espace intérieur du boîtier (11) en deux volumes (14, 15),
- un haut-parleur (17) qui est disposé dans l'ouverture (16) de la paroi de séparation (13), et
- un pavillon (20) qui fait communiquer l'un des deux volumes (14/15) avec l'espace situé à l'extérieur du boîtier (11),
caractérisé en ce
que le dispositif de reproduction a un volume total d'environ 8 litres et
que le dispositif de reproduction est disposé entièrement à l'intérieur de l'accoudoir central d'un véhicule automobile.

2. Dispositif de reproduction selon la revendication 1,
caractérisé en ce
que le pavillon (20) est dirigé vers le tableau de bord du véhicule lorsque l'accoudoir central est déplié.

3. Dispositif de reproduction selon la revendication 1,
caractérisé en ce
que l'élément de siège, qui est susceptible de loger l'accoudoir central relevé dans une ouverture d'introduction (27), est conçu ce manière à ne pas recouvrir ni fermer le pavillon (20).

4. Dispositif de reproduction selon l'une des revendications 1 à 3,
caractérisé en ce
que le pavillon (20), qui fait communiquer l'un des deux volumes (14, 15) avec l'espace situé à l'extérieur du boîtier (11), est l'embouchure (29) d'un canal bass-reflex (21) qui pénètre à l'intérieur du volume (14/15) considéré.

5. Dispositif de reproduction selon la revendication 4,
caractérisé en ce
que l'amplificateur (23) destiné au fonctionnement du haut-parleur (17) est disposé dans l'un des deux volumes (14/15).

6. Dispositif de reproduction selon la revendication 5,
caractérisé en ce
que le canal bass-reflex (21) est constitué au moins en partie de tôle et que l'amplificateur (23) est disposé dessus de manière à évacuer une partie de sa chaleur dissipée par l'intermédiaire du canal bass-reflex (21).
